# EUROPÄISCHE PATENTANMELDUNG

(11) **EP 4 047 068 A1**
(43) Veröffentlichungstag der Anmeldung: **24.08.2022**
(21) Anmeldenummer: 21158215.0
(22) Anmeldetag: 19.02.2021
(51) Int. Cl.: C09J 153/02, C09K 9/00, B41M 5/26

(54) **SCHMELZKLEBSTOFFZUSAMMENSETZUNG, DIE UNTER EINFLUSS VON LASERLICHT IHRE FARBE ÄNDERT, KIT AUFWEISEND DIE SCHMELZKLEBSTOFFZUSAMMENSETZUNG, VERWENDUNG UND VERFAHREN ZUM MARKIEREN VON SCHMELZKLEBSTOFFZUSAMMENSETZUNGEN**

(71) Anmelder: artimelt AG, 6210 Sursee (CH)
(72) Erfinder: Senn, Nicole, 5726 Unterkulm (CH); Shaqiri, Valbona, 6122 Menznau (CH)
(74) Vertreter: Hepp Wenger Ryffel AG

(57) **Zusammenfassung**

Die Erfindung bezieht sich auf eine Schmelzklebstoffzusammensetzung, welche wenigstens eine Verbindung aufweist, die unter Einfluss von Laserlicht ihre Farbe ändert oder zu einer Farbänderung in der Schmelzklebstoffzusammensetzung führt, auf ein Verfahren zum Markieren einer Schmelzklebstoffzusammensetzung mit einem Laser, ein Kit umfassend die Schmelzklebstoffzusammensetzung sowie auf die Verwendung einer solchen Schmelzklebstoffzusammensetzung als Kunststofffolie; Klebefilm; als Beschichtungsmittel; als Ein-Komponenten-Klebstoff; als Zwei-Komponenten-Klebstoff; als Etikette, insbesondere transparente Etikette.

## Beschreibung

Die Erfindung betrifft das technische Gebiet der Schmelzklebstoffzusammensetzungen, insbesondere Schmelzklebstoffzusammensetzungen, die markierbar sind.

Es ist bekannt, dass thermoplastische Klebstoffe bei Erwärmung nahe dem Schmelzpunkt ihre Haftleistung verlieren, so dass eine Klebestelle einfach gelöst werden kann. Durch starkes Abkühlen werden Klebstoffe spröde und brüchig, was ein einfaches Aufbrechen einer Klebestelle ermöglicht. Eine gelöste oder aufgebrochene Klebestelle lässt sich durch einen Erwärmvorgang des Klebers an der Klebestelle gefolgt von Anpressen der Klebestelle und Abkühlen auf Raumtemperatur meist wieder verkleben. Lösen/Aufbrechen und Wiederverkleben der Klebestelle bleibt in der Regel unbemerkt, was insbesondere bei sicherheitsrelevanten Anwendungen nachteilig ist.

Im Stand der Technik sind Void-Tapes bekannt, um das Wiederverkleben von sicherheitsrelevanten Anwendungen zu markieren. Die Klebstoffe solcher Void-Tapes müssen hohe Anforderungen erfüllen, damit nicht Wärme- und/oder Kältebehandlungen die Markierungspersistenz unterwandern. Die EP2873708 zeigt beispielsweise eine Klebstoffzusammensetzung, die zwei Farbumschläge aufweist: Einen ersten Farbumschlag bei einer Erhöhung der Umgebungstemperatur auf eine Temperatur ≥ T₁ und einen zweiten Farbumschlag bei einer Erniedrigung der Umgebungstemperatur auf eine Temperatur < T₂, wobei T₁ > T₂ ist. Dies verhindert, dass ein Substrat-Klebstoff-Verbund durch einfaches Erhitzen und/oder Kühlen unbemerkt wieder in seinen ursprünglichen Zustand versetzt werden kann. Allerdings sind solche Systeme aufwändig und teuer.

Es ist daher die Aufgabe der Erfindung, die vorstehend beschriebenen Nachteile von Klebstoffzusammensetzungen zu überwinden. Insbesondere soll eine Klebstoffzusammensetzung bereitgestellt werden, welche verbesserte Sicherheitseigenschaften hat, basierend auf Prägungen, welche durch Lasermarkierung direkt auf einen Klebstoff aufgebracht werden, können. Weiter soll ein Verfahren zum Markieren von entsprechenden Schmelzklebstoffzusammensetzungen sowie Verwendungen dafür bereitgestellt werden, und es soll ein Kit umfassend die Klebstoffzusammensetzung bereitgestellt werden.

Diese Aufgaben werden durch die Schmelzklebstoffzusammensetzung, das Verfahren und die Verwendung mit den in den unabhängigen Patentansprüchen aufgeführten Merkmalen gelöst.

Ein erster Aspekt der Erfindung bezieht sich auf eine thermoplastische Schmelzklebstoffzusammensetzung, welche wenigstens eine Verbindung enthält, die unter Einfluss von Laserlicht ihre Farbe ändert oder zu einer Farbänderung in der Schmelzklebstoffzusammensetzung führt.

Unter dem Begriff "Schmelzklebstoffzusammensetzung" wird hier verstanden: Eine bei Raumtemperatur feste, im Wesentlichen wasser- und lösungsmittelfreie thermoplastische Klebstoffzusammensetzung, vorzugsweise ein Haftklebstoff (hot-melt pressure sensitive adhesive, HMPSA), welche aus der Schmelze verarbeitet wird und welche beim Abkühlen unter Verfestigung physikalisch abbindet.

Lasermarkierbare thermoplastische Formmassen sind an sich bekannt. Als Pigmente in der Literatur besprochen werden beispielsweise TiO₂ und Sb₂O₃, Kupferhydroxidphosphat, Molybdän-(IV)-oxid, dotiertes Zinnoxid, Kupfersalze (Phosphate, Sulfate, Thiocyanate), Kupferpyrophosphat-Hydrat und/oder Mangansulfathydrat, Borsäureanhydrid, Zinkhydroxystannat und Zinn(II)oxalat, Alkalikupferdiphosphat, Bismut-Mischoxide, Kupferfumarat, Kupfermaleat, Kobalt- und Eisenphosphate, etc. Eine lasermarkierbaren Klebstoffzusammensetzung eignet sich jedoch ganz besonders für den Einsatz zur klebenden Befestigung auf wenigstens einem Substrat, wobei nach der Befestigung Markierungen (insbesondere Schriften, Zeichen, Sicherheitsmuster, z.B. Schraffuren) direkt auf die Klebstoffzusammensetzung aufgebracht werden können. Eine präzise Markierung in Verbindung mit guter Kohäsion und Adhäsion macht das vorübergehende Lösen und Wiederverkleben von klebegesicherten Verschlüssen sichtbar und die Sicherheitsmarkierung kann nicht nachträglich durch Erwärmen der Klebstoffzusammensetzung wiederhergestellt werden.

Als besonders geeignete Verbindungen, die unter Einfluss von Laserlicht ihre Farbe ändern oder zu einer Farbänderung in der Schmelzklebstoffzusammensetzung führen, haben sich partikuläre lichtsensitive Mischsalz-Verbindungen erwiesen, die mehrere Kationen enthalten, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII. Nebengruppe des Periodensystems und der Lanthaniden, wobei die enthaltenen Kationen von mindestens zwei unterschiedlichen Elementen stammen.

Die Verbindung, welche unter Einfluss von Laserlicht ihre Farbe ändert oder zu einer Farbänderung in der Schmelzklebstoffzusammensetzung führt, wird in eine geeignete Polymermatrix eingemischt. Die Schmelzklebstoffzusammensetzung muss den höchsten Anforderungen genügen an Mischbarkeit, thermische Stabilität, Farbtreue, solange sie keinem Laserlicht ausgesetzt sind, und einen präzis lokalisierten Farbumschlag im Bereich, wo die Lasermarkierung aufgebracht wird.

Die Schmelzklebstoffzusammensetzung muss weiter beim Abkühlen unter Verfestigung physikalisch so abbinden, dass eine bestimmte Haftung erreicht wird. Je nach geplanter Verwendung der Schmelzklebstoffzusammensetzung kann die angestrebte Schälfestigkeit höher oder tiefer sein. Es ist bevorzugt, dass die Schmelzklebstoffzusammensetzung bei bestimmungsgemässem Gebrauch eine 180° Schälfestigkeit auf Stahl von mehr als 5 N/25mm aufweist, vorzugsweise von mehr als 6.5 N/25mm, besonders bevorzugt von mehr als 8 N/25mm, jeweils gemessen gemäss Messmethode PSTC-101, Methode A, der PSTC "Test Methods for Pressure Sensitive Adhesive Tapes", 16th Ed. (2014). Solch hohen Anforderungen an die Schälfestigkeit werden typischerweise gestellt, wenn die Zusammensetzung als Sicherheitsklebstoff zwischen Substraten verwendet werden soll.

Es können aber auch bewusst niedrigere Schälfestigkeiten eingestellt werden, wenn beispielsweise mit dem Klebstoff ablösbare, laser-markierbare Etiketten hergestellt werden sollen. In diesem Fall ist es bevorzugt, dass die Schmelzklebstoffzusammensetzung bei bestimmungsgemässem Gebrauch eine 180° Schälfestigkeit auf Stahl von 1 bis 8 N/25mm aufweist, vorzugsweise von 2 bis 6.5 N/25mm, besonders bevorzugt von 3 bis 5 N/25mm, jeweils gemessen gemäss Messmethode PSTC-101, Methode A, der PSTC "Test Methods for Pressure Sensitive Adhesive Tapes", 16th Ed. (2014).

In beiden Fällen ist es bevorzugt, wenn die Schmelzklebstoffzusammensetzung eine Schmelzviskosität bei einer Temperatur von 160°C im Bereich von 1 Pa*s bis 150 Pa*s, vorzugsweise von 5 Pa*s bis 40 Pa*s, aufweist, bestimmt gemäss DIN EN ISO 3219, Messmethode Kegel/Platte. Damit ist gute Verarbeitbarkeit der Schmelzklebstoffzusammensetzung gewährleistet.

Es hat sich herausgestellt, dass viele Hotmelt-Klebstoffe, wie sie im Stand der Technik bekannt sind, für die oben genannten Zwecke ungeeignet sind. Beispielsweise lassen sich laserlichtsensitive Verbindungen schlecht in Acrylat-Matrizen einmischen und bleiben in Ethylen-Vinylacetat-basierten Formulierungen über die Zeit nicht stabil, insbesondere dann nicht, wenn sie dabei erhöhten Temperaturen (175°C) ausgesetzt sind. Es ist daher bevorzugt, wenn die Schmelzklebstoffzusammensetzung auf Polyolefinen und/oder auf synthetischem Kautschuk (thermoplastic rubber) basieren.

Es ist ganz besonders bevorzugt, wenn die Zusammensetzung wie oben beschrieben auf elastomerem Synthesekautschuk basiert, insbesondere auf
▪ gesättigten thermoplastischen Polystyrolelastomeren, kurz TPS-Elastomeren, vorzugsweise: Styrol-Ethylen-Butylen-Copolymeren, kurz SEB; Styrol-Ethylen-Propylen-Copolymeren, kurz SEP; Styrol-Ethylen-Ethylen-Propylen-Copolymeren, kurz SEEP; Styrol-Ethylen-Butylen-Styrol-Copolymeren, kurz SEBS; Styrol-Ethylen-Propylen-Styrol-Copolymeren, kurz SEPS; Styrol-Ethylen-Ethylen-Propylen-Styrol-Copolymeren, kurz SEEPS; sowie Kombinationen hiervon; und/oder
▪ ungesättigten thermoplastischen TPS-Elastomeren, vorzugsweise: Styrol-Butadien-Blockcopolymeren, kurz SB; Styrol-Isopren-Blockcopolymeren, kurz SI; Styrol-Butadien-Butylen-Blockcopolymeren, kurz SBB; Styrol-Butadien-Isopren-Blockcopolymeren, kurz SBI; Styrol-Butadien-Styrol-Blockcopolymeren, kurz SBS; Styrol-Butadien-Butylen-Styrol-Blockcopolymeren, kurz SBBS; Styrol-Isopren-Styrol-Blockcopolymeren, kurz SIS; Styrol-Butadien-Isopren-Styrol-Blockcopolymeren, kurz SBIS; sowie Kombinationen hiervon.
▪ Polyolefinen, insbesondere Polyethylen, Polypropylen, Polyolefin-Copolymeren und/oder amorphen Poly-Alpha-Olefinen (APAO),
▪ Ethylvinylacetate (EVA) und Copolymeren davon (EVAC).

In diesem Zusammenhang ist unter dem Begriff «basierend auf» zu verstehen, dass ein Anteil von wenigstens 15 Gew.-%, bevorzugt von wenigstens 18 Gew.-%, besonders bevorzugt von wenigstens 20 Gew.-% der Schmelzklebstoffzusammensetzung aus elastomerem Synthesekautschuk besteht. Schmelzklebstoffzusammensetzungen auf der Basis von elastomerem Synthesekautschuk lässt sich häufig gut mit den oben erwähnten laserlichtaktivierbaren Verbindungen mischen und weitgehend homogenisieren und die Formulierung bleiben auch über 24 Stunden bei 175°C stabil. Es scheiden sich kaum Phasen ab.

Bevorzugt sind ungesättigte thermoplastische TPS-Elastomere; besonders bevorzugt sind Styrol-Isopren-Styrol-Blockcopolymeren, etwa SIS-Blockcopolymere mit einem Styrol-Anteil von 10-40 %, besonders bevorzugt einem Styrol-Anteil von 15-30 %. Ein relativ tiefer Styrol-Anteil von 10-20 Gew-%, bevorzugt 13-17 Gew-%, kann typischerweise verwendet werden, wenn eine hohe Schälfestigkeit angestrebt wird (permanente Ausführungsformen). Ein relativ hoher Styrol-Anteil von 21-40 Gew-%, bevorzugt 35-35 Gew.-%, kann typischerweise verwendet werden, wenn eine tiefere Schälfestigkeit angestrebt wird (ablösbare Ausführungsformen).

Es ist weiter bevorzugt, dass die Zusammensetzung wie oben beschrieben Bestandteile aufweist, die ausgewählt sind, alleine oder in Kombination, aus der Gruppe bestehend aus
- Klebe-Harzen, insbesondere: aliphatische, cycloaliphatische und aromatische Kohlenwasserstoff-basierte Harze; Kolophoniumharz(-ester); Terpen-basierte Harze (auch phenolisch); Tall-Öl; inbesondere hydrierte Pentaerythrolharze; insbesondere hydrierte Glyzerinharze; Hydroabietylharze; Olefinharze; Pinenharze; α-Methylstyrolhzarze; Styrolharze; Cumaren-Indenharze; Melaminharze; Polyethyleniminharze; Cumaronharze; sowie Kombinationen hiervon;
- Weichmachern, insbesondere: Phthalate; Adipate; Citrate; Phosphate; Trimellitsäure; Sulfonsäure; raffinierte Napth-Balinöle; Weiss-Öle, Mineralöle, Polybuten, Polybutylen-Polyisobutylen Copolymere; Paraffinöle, Polyalpha-Olefine; Alkylester von Cyclohexandicarbonsäure und Adipinsäure; Acrylatweichharze, insbesondere Poly-n-Butylacrylat; Polyvinylmethylether; und Mischungen davon;
- Stabilisatoren, insbesondere: Sterisch gehinderte Phenole, insbesondere als Rest an Phosphiten; sterisch gehinderte Lactone; sterisch gehinderte Amine; sowie Kombinationen hiervon.

Durch die Additive werden weitere spezielle Eigenschaften verschiedene Zusätze erreicht, namentlich wird die Klebrigkeit der Schmelze bei Verarbeitungstempeatur erhöht, es wird ausreichende Weichheit gewährleistet, der Blend wird stabilisiert und die Viskosität reguliert. Es hat sich herausgestellt, dass selbst beim Einmischen in Zusammensetzungen basierend auf elastomeren Synthesekautschuken sich die Formulierungen unter Einwirkung von Tageslicht und/oder erhöhten Temperaturen (175°C) verfärben können oder dass sich unerwünschte Phasen abscheiden. Dies kann verhindert werden, indem weitere der oben genannten Bestandteile für die Zwecke der Schmelzklebstoffzusammensetzung optimiert werden. Ganz besonders bevorzugt ist es, wenn die Schmelzklebstoffzusammensetzung ein cycloaliphatisches Kohlenwasserstoffharz enthält. Weiter haben sich als Weichmacher Mineralöle und/oder Polyalphaolefine als besonders geeignet erwiesen.

Es ist bevorzugt, dass sich die Anteile von laseraktivierbarer Verbindung, elastomerem Synthesekautschuk, Klebeharzen, Weichmachern und Stabilisatoren insgesamt auf 100% ergänzen.

Erfindungsgemässe thermoplastische Klebstoffzusammensetzungen können in 100 Gew.% Gesamtzusammensetzung vorzugsweise enthalten:
- 1 bis 10 Gew.-% (insbesondere 2 bis 5 Gew-%) einer Verbindung, die unter Einfluss von Laserlicht ihre Farbe ändert oder zu einer Farbänderung in der Schmelzklebstoffzusammensetzung führt
- 20 bis 80 Gew.% (insbesondere 20-45 Gew.%) eines oder mehrerer Blockcopolymere, inbesondere wie vorstehend genannt;
- 5 bis 80 Gew.% (insbesondere 20-60 Gew.%) eines oder mehrerer Klebe-Harze, insbesondere wie vorstehend genannt;
- 0 bis 60 Gew.% (insbesondere 0,1-50 Gew.%, weiter insbesondere 10-40 Gew.%) eines Weichmachers, insbesondere wie vorstehend genannt; und
- optional: 0,1 bis 5 Gew.% (insbesondere 0,5 bis 2 Gew.%) eines Stabilisators, insbesondere wie vorstehend genannt.

Eine solche thermoplastische Klebstoffzusammensetzung hat herausragende Eigenschaften betreffend Homogenität, Stabilität, Adhäsion, Kohäsion und Temperaturverhalten, Klebrigkeit im Bereich der Verarbeitungstemperatur sowie Viskosität.

In einer bevorzugten Ausführungsform ist die Zusammensetzung wie oben beschrieben so beschaffen, dass sie einen Farbumschlag durchläuft, wenn sie Laserlicht einer der folgenden Wellenlängenbereiche ausgesetzt wird:
- Wellenlängenbereich von 300 bis 400 nm, bevorzugt 330 bis 380 nm (UV-Laser);
- Wellenlängenbereich von 500 bis 570 nm, bevorzugt 510 bis 560 nm (grüner Laser); und/oder
- Wellenlängenbereich von 1000 bis 1200 nm, bevorzugt 1030 bis 1100 nm (IR-Laser).
Diese Laser sind gebrauchsüblich, einfach handhabbar und gut einstellbar um präzise Kontraste in der Zusammensetzung zu erzeugen.

In einer bevorzugten Ausführungsform umfasst die Zusammensetzung zusätzlich ein Farbumschlagsystem, durch welches
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist.

Entsprechende Farbumschlagsysteme sind in der EP2873708A1 offenbart und die Inhalte dieser Schrift werden hiermit durch Bezugnahme aufgenommen. Beispielsweise kann der erste und/oder der zweite Farbumschlag durch ein verkapseltes Farbpigment oder mehrere verkapselte Farbbildner bewirkt werden. Nutzbare verkapselte Farbbildner sind als solche bekannt aus EP2431444A1, deren Inhalt hiermit ebenfalls durch Bezugnahme eingeschlossen wird. Ein oder mehrere eingesetzte Farbbildner der Klebstoffzusammensetzung können ausgewählt sein aus der Gruppe bestehend aus Triphenylmethan-Verbindungen, Fluoran-Verbindungen, Phenothiazin-Verbindungen, Indolylphthalido-Verbindungen, Leucoauramin-Verbindungen, Spiropyran-Verbindungen, Rhodaminlactum-Verbindungen, Azaphthalid-Verbindungen, Benzoxazin-Verbindungen, Diphenylmethane phthalides, Phenylindolyl phthalides, Indolyl phthalides, Diphenylmethane azaphthalides, Phenylindolyl azaphthalides, Fluorans, Styrylquinolines, Diazarhodamine lactones. Besonders bevorzugt sind die in Absatz [0013] von DE 42 23 976 A1 und Absatz [0012] von EP 2 431 444 A1 genannten Verbindungen; die Offenbarung dieser Dokument wird bezüglich dieser konkreten Verbindungen in die vorliegende Beschreibung durch Bezugnahme aufgenommen.

Ein entsprechendes Farbumschlagsystem kann der vorstehenden Schmelzklebstoffzusammensetzung beigemischt werden, sodass sich sein Anteil typischerweise auf 1 bis 12 Gew-%, bevorzugt 2 bis 4 Gew.-%, des Gesamtgewichts beläuft.

Dadurch resultiert eine Schmelzklebstoffzusammensetzung mit verbesserten Sicherheitseigenschaften, da durch sie Manipulationen mechanischer wie auch thermischer Art gleichermassen visualisierbar sind.

Ein weiterer Aspekt der Erfindung bezieht sich auf ein Verfahren zum Markieren von Schmelzklebstoffzusammensetzungen, aufweisend die Schritte:
a. Bereitstellen einer Schmelzklebstoffzusammensetzung nach Anspruch 1;
b. Erhitzen der Schmelzklebstoffzusammensetzung;
c. Auftragen der Schmelzklebstoffzusammensetzung auf wenigstens ein Substrat;
d. Abbindenlassen der Schmelzklebstoffzusammensetzung;
e.Aufbringen einer Markierung in/auf der Schmelzklebstoffzusammensetzung mittels Laserlicht.

Ein solches Verfahren zeichnet sich durch besondere Einfachheit, Anwenderfreundlichkeit und Sicherheit aus. Durch das direkte Aufbringen der Markierung in/auf der abgebundenen Schmelzklebstoffzusammensetzung erübrigt sich das vorgängige Laminieren von Mehrschichtverbunden aus markierten oder markierbaren Folien einerseits und Klebefolien andererseits. Es wird auch wirksam die Gefahr einer Delamination verhindert. Damit ist das Verfahren besonders kosteneffizient und zuverlässig.

Es ist bevorzugt, dass das Verfahren zum Markieren einer Schmelzklebstoffzusammensetzung wie oben beschrieben ist.

Es ist denkbar, dass die Schmelzklebstoffzusammensetzung als Etikette, beispielsweise transparente Etikette, auf einer Trägerfolie bereitgestellt, erhitzt und auf einem gewünschten Substrat klebend befestigt wird. Nach dem Abbinden kann die gewünschte Markierung, beispielsweise ein Barcode oder einen QR-Code aufgebracht werden. Das Verfahren kommt mit einem Minimum an Komponenten aus. Wenn eine Schmelzklebstoffzusammensetzung wie oben beschrieben mit einer 180° Schälfestigkeit auf Stahl von 1 bis 8 N/25mm aufweist, vorzugsweise von 2 bis 6.5 N/25mm, besonders bevorzugt von 3 bis 5 N/25mm verwendet wird, kann eine solche Etikette als wiederablösbare Etikette ausgebildet sein, beispielsweise um ein Produkt oder eine Verpackung für die Dauer eines Produktionsschritts eindeutig zu markieren.

Es versteht sich von selbst, dass anstelle einer Etikette auch eine Formkörper oder eine Klebeschicht auf eine beliebige Substratoberfläche oder Substratstruktur aufgetragen werden kann und so dem Anwender eine grosse Flexibilität an Anwendungen eröffnet wird.

Es ist besonders bevorzugt, wenn das Verfahren wie vorstehend im beschrieben im Schritt c die Schmelzklebstoffzusammensetzung zwischen einem ersten und einem zweiten Substrat aufgetragen wird, um das erste und das zweite Substrat zu verkleben. In einem solchen Verfahren ergeben sich neben den bereits genannten Vorteilen, nämlich der Einfachheit, Komponentenreduktion, Delaminationssicherung und Flexibilität, weitere Vorteile aus dem Bereich Sicherheit. Wenn eine Sicherheitsmarkierung direkt auf der Schmelzklebstoffzusammensetzung aufgebracht wird, bildet die abgebundene Schmelzklebstoffzusammensetzung ein Klebstoffsiegel, welches nicht mehr zusammengefügt werden kann (beispielsweise unter neuerlichem Wärmeeintrag) ohne dass gleichzeitig die Sicherheitsmarkierung verloren ginge. Diese Eigenschaft macht das Verfahren besonders geeignet für die Versiegelung von Sicherheitsbehälter für Fälschungsziele wie beispielsweise pharmazeutische Produkte. Natürlich ist es von Vorteil, wenn ein sehr präzises Markierungsmuster aufgetragen wird, beispielsweise eine Schraffur. Im Falle einer Sicherungsverklebung ist es bevorzugt, wenn die Zusammensetzung eine hohe Adhäsion und Kohäsion aufweist, insbesondere eine 180° Schälfestigkeit auf Stahl von mehr als 5 N/25mm aufweist, vorzugsweise von mehr als 6.5 N/25mm, besonders bevorzugt von mehr als 8 N/25mm.

In einer bevorzugten Ausführungsform wird im oben beschriebenen Verfahren die Markierung mit einem Laser des folgenden Wellenlängenbereichs aufgebracht:
- Wellenlängenbereich von 300 bis 400 nm, bevorzugt 330 bis 380 nm (UV-Laser);
- Wellenlängenbereich von 500 bis 570 nm, bevorzugt 510 bis 560 nm (grüner Laser);
- Wellenlängenbereich von 1000 bis 1200 nm, bevorzugt 1030 bis 1100 nm (IR-Laser);
oder einer Kombination davon.

Die Lasermarkierung kann direkt auf die Zusammensetzung aufgebracht werden. Alternativ kann sie durch eine Trägerfolie, insbesondere eine thermisch stabile Folie, hindurch aufbracht werden oder durch ein zu verklebendes Substrat hindurch aufgebracht werden. Typischerweise wird dadurch ein Farbumschlag von farblos zu schwarz erzielt.

Vorteilhafterweise werden auch weitere Parameter der Lasermarkierung auf die Schmelzklebstoffzusammensetzung hin optimiert, um einen optimalen Kontrast zu erzielen. Es ist besonders bevorzugt, wenn die Markierung mit einer Pulsfrequenz von 14 bis 18 kHz und/oder einer Leistung von 3 bis 6 Watt aufgebracht wird. Diese Energien sind hoch genug, einen Kontrast zu erzeugen, und beschädigen gleichzeitig die Polymermatrix nicht. Eine Brennweite von f = 140 bis 180 mm, insbesondere 155 bis 165 mm hat sich als geeignet erwiesen. Eine typische Markiergeschwindigkeit bewegt sich zwischen 400 und 600 mm/s.

Ein Aspekt der Erfindung bezieht sich auf ein Verfahren zum Applizieren eines Klebstoffsystems auf ein Substrat, umfassen die Schritte a bis e wie vorstehend beschrieben, und zusätzlich umfassend den Schritt:
f. Auftragen einer Schicht einer von der Schmelzklebstoffzusammensetzung verschiedenen, zweiten Klebstoffzusammensetzung in räumlicher Nähe der Schmelzklebstoffzusammensetzung, bevorzugt unmittelbar angrenzend an die Schmelzklebstoffzusammensetzung,
wobei durch die zweite Klebstoffzusammensetzung
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist;
und wobei besonders bevorzugt die Schmelzklebstoffzusammensetzung und die zweite Klebstoffzusammensetzung einander ganz oder teilweise überlappen.

Als zweite, von der Schmelzklebstoffzusammensetzung verschiedene Klebstoffzusammensetzung wird bevorzugt eine Klebstoffzusammensetzung verwendet, wie sie in der EP2873708A1 offenbart ist. Die Inhalte dieser Schrift werden hiermit durch Bezugnahme aufgenommen.

Beispielsweise können zum Versiegeln eines Sicherheitsbeutels zwischen zwei Beutelwänden Streifen der ersten und der zweiten Klebstoffzusammensetzung abwechslungsweise aufgetragen werden. Dadurch resultiert ein eine Verklebung mit verbesserten Sicherheitseigenschaften, da durch das Klebstoffsystem Manipulationen mechanischer wie auch thermischer Art gleichermassen visualisierbar sind.

Ein Aspekt der Erfindung bezieht sich auf die Verwendung einer Zusammensetzung wie oben beschrieben als Kunststofffolie; Klebefilm; als Beschichtungsmittel; als Ein-Komponenten-Klebstoff; als Zwei-Komponenten-Klebstoff; als Etikette, insbesondere transparente Etikette. In jedem Fall kann das Klebstofferzeugnis, wie oben beschrieben, auf einem einzigen Substrat klebend befestigt werden oder zum Verkleben von zwei oder mehr Substraten verwendet werden.

Es ist besonders bevorzugt, wenn die Kunststofffolie; der Klebefilm; das Beschichtungsmittel; der Ein-Komponenten-Klebstoff; der Zwei-Komponenten-Klebstoff; die Etikette, insbesondere transparente Etikette, nach dem Abbinden lasermarkiert und als Sicherheitsklebstoff zur irreversiblen Visualisierung einer Trennung von Substrat und Klebstoff verwendet wird. Den Anwendungen solcher Zusammensetzungen sind kaum Grenzen gesetzt. Neben den bereits erwähnten Codes und Sicherheitsmerkmalen sind Aufträge auf Artikel, Verpackungen, Transportbeutel, Nahrungsmittelbehältnisse, Medizinalprodukte etc. denkbar, insbesondere wenn diese oder Teile von diesen transparent sind. Bei sicherheitsrelevanten Anwendungen ist es stets bevorzugt, dass die 180° Schälfestigkeit auf Stahl mehr als 5 N/25mm aufweist, vorzugsweise mehr als 6.5 N/25mm, besonders bevorzugt mehr als 8 N/25mm beträgt.

Ein Aspekt der Erfindung bezieht sich auf eine lasermarkierbare Schmelzklebstoffzusammensetzung wie vorstehend beschrieben und zusätzlich umfassend eine zweite, von der Schmelzklebstoffzusammensetzung verschiedene Klebstoffzusammensetzung, wobei durch die zweite Klebstoffzusammensetzung
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist;
und optional umfassend einen Informationsträger mit Instruktionen zum Ausführen eines Verfahrens umfassend den Schritt f, wie vorstehend beschrieben.

Dadurch resultiert eine Verklebung mit verbesserten Sicherheitseigenschaften, da durch das Klebstoffsystem Manipulationen mechanischer wie auch thermischer Art gleichermassen visualisierbar sind.

Die Erfindung wird anhand nachfolgender Beispiele und Zeichnungen noch eingehender erläutert.

Es zeigen
- Fig 1: Lasermarkierungs-Testserie auf einem Klebstofffilm, hergestellt gemäss Beispiel 2 (#1);
- Fig 2: Lasermarkierungs-Testserie auf einem Klebstofffilm, hergestellt gemäss Beispiel 3 (#2).

### Beispiel 1: Verträglichkeit und Stabilität

Als Verbindung, die unter Einfluss von Laserlicht ihre Farbe ändert oder zu einer Farbänderung in der Schmelzklebstoffzusammensetzung führt, wurde Budit L23 verwendet, eine Formulierung mit konzentriertem licht-aktiven Pigmenten im sichtbaren und Nahinfrarot-Bereich, kommerziell erhältlich von Chemische Fabrik Budenheim KG.

Es wurden Verträglichkeits- und Stabilitätstests mit in verschiedenen Polymermatrixprodukten durchgeführt, wobei jeweils 5 Gew.-% Budit L23 eingemischt und hernach bei 175°C für 24 Stunden gelagert wurden.

Es ergaben sich folgende Resultate:

| Klebstoffmatrix | Ergebnis | Begründung |
|---|---|---|
| Ethylen Vinylacetat (EVA) Formulierung | *** | einmischbar, nach 24h starke Hautbildung, leicht verfärbt |
| Styrolblockcopolymer (SBC) Formulierung 1 | * | Schlecht einmischbar, nach 24h schwarz |
| SBC Formulierung 2 | **** | Gut einmischbar, nach 24h starke Hautbildung, leicht verfärbt |
| SBC Formulierung 3 | * | Schlecht einmischbar, nach 24h schwarz, Klebrigkeitsverlust |
| SBC Formulierung 4 | **** | Gut einmischbar, nach 24h starke Hautbildung, leicht verfärbt |
| Polyolefin-Formulierung | ***** | Gut einmischbar, nach 24 schwache Verfärbung |
| Formulierung mit hydriertem Styrolblockcopolymer (H-SBC) | *** | einmischbar, nach 24 schwache Verfärbung |
| SBC Formulierung 5 | **** | Gut einmischbar, nach 24h Hautbildung, leicht verfärbt |
| Acrylat-Formulierung | * | Nicht einmischbar |

Die Klebstoffmatrix kann neben dem erwähnten Polymer noch ein oder mehrere Harze und/oder Öle enthalten. Die SBC-Formulierungen variieren in Bezug auf Harz- und/oder Ölzusätze.

Die Ergebnisspalte gibt eine qualitative Gesamtbeurteilung von Mischbarkeit, Stabilität und/oder Farbtreue der Formulierung an.

Die qualitativen Werte sind wie folgt zu verstehen:
* = unbefriedigend
** = befriedigend
*** = gut
**** = gut bis sehr gut
***** = sehr gut

### Beispiel 2: Herstellung permanente Klebstoffformulierung

Gestützt auf die oben beschriebenen Versuche wurde eine erste Formulierung (#1) zur Herstellung von einem permanenten Klebstoff mit hoher Schälfestigkeit wie folgt gemischt:

| Bestandteil | Anteil (Gew.-%) |
|---|---|
| Styrene-Isopren-Block-Copolymer mit 15% Styrolanteil | 30 |
| KW-Harz mit Erweichungspunkt von 85°C | 44 |
| Polyisobutylen mit einem Tropfpunkt von -7°C | 20 |
| Stabilisator | 1 |
| Laser aktivierbares Pigment (Budit L23) | 5 |

### Beispiel 3: Herstellung ablösbare Klebstoffformulierung

Gestützt auf die oben beschriebenen Versuche wurde eine zweite Formulierung (#2) zur Herstellung von einem ablösbaren Klebstoff mit mittlerer Schälfestigkeit wie folgt gemischt:

| Bestandteil | Anteil (Gew.-%) |
|---|---|
| Styrene-Isopren-Block-Copolymer mit 30% Styrolanteil | 37 |
| KW-Harz mit Erweichungspunkt von 85°C | 44 |
| Mineralöl | 13 |
| Stabilisator | 1 |
| Laser aktivierbares Pigment (Budit L23) | 5 |

### Beispiel 4: Abschneiden im 180° Schälfestigkeitstest und im Loop Tack auf Glas

Klebstoff: #1 und #2
Trägermaterial: PET Mylar 50µm

### Beschichtungsgewicht: 25 g/m², direkt beschichtet;

| | **#1** | **#2** |
|---|---|---|
| **180°-Schälfestigkeit auf Stahl** nach 24 h [N/25 mm]; PSTC 101 | 14 (AB) | 8 (AB) |
| **Loop Tack auf Glas** Finat 9, [N/25mm] | 20 (AB) | 13 (AB) |
| **Schertemperatur auf Stahl (SAFT)** 0,5°C/min. / 1000 g / 12.5x25 mm / nach Verklebung 20 min klimatisiert, Wert in °C | 48 (KB) | 65 (KB/AB) |

| | | |
|---|---|---|
| AB: Adhäsionsbruch, KB : Kohäsionsbruch | | |

Die Angabe *"PSTC"* bezieht sich im Rahmen dieser Anmeldung stets auf *"*Test Methods for Pressure Sensitive Adhesive Tapes, 16th Edition (2014*)".* Die Test Methode A für einseitig beschichtete Bänder wurde verwendet.

Die Angabe *"Finat* 9" bezieht sich auf das "Finat Technische Handbuch, Testmethoden", 9. Ausgabe, 2016, Test FTM 9 "Looptack" Anfangshaftung.

Die Angabe *"klimatisiert"* bezieht sich im Rahmen dieser Anmeldung stets auf 23°C und 50% rF.

### Beispiel 5: Aufbringen von Lasermarkierungen

Flächige Proben der beispielhaften Formulierungen #1 und #2 wurden Lasermarkierungstests unterzogen. Dabei wurde jeweils eine Probe von Klebstoff #1 und Klebstoff #2 Lasern mit verschiedenen Wellenlängen (grün, UV, IR) markiert. In einer ersten Reihe wurde die Markierung durch eine thermisch stabile PET Folie hindurch aufgebracht. In einer zweiten Reihe erfolgte die Markierung direkt auf die klebrige Seite des Klebstoffs.

Auf jede Probe und mit jedem Laser wurde eine Navigatormatrix mit variierenden Parametern (Pulsfrequenz, Leistung, Markiergeschwindigkeit) aufgetragen, um optimale Kontraste zu erzeugen.

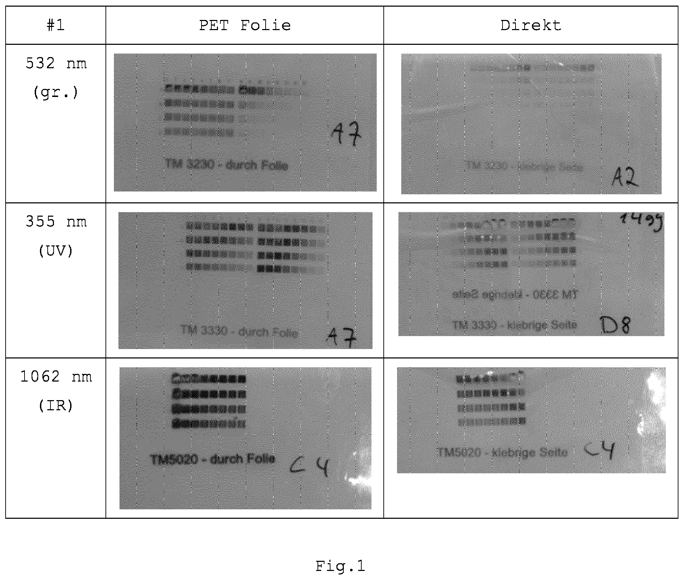

Es zeigt Fig 1 die Versuchsanordnung auf der permanenten Klebstoffformulierung #1, linkerhand durch die PET-Folie hindurch, rechterhand im Direktauftrag. An jedem Laser wurde eine f = 160mm Optik verwendet. Es ist ersichtlich, dass der UV- und der IR-Laser bisweilen mit zu hoher Energie betrieben wurden, sodass Löcher in den Klebstoff eingebrannt wurden.

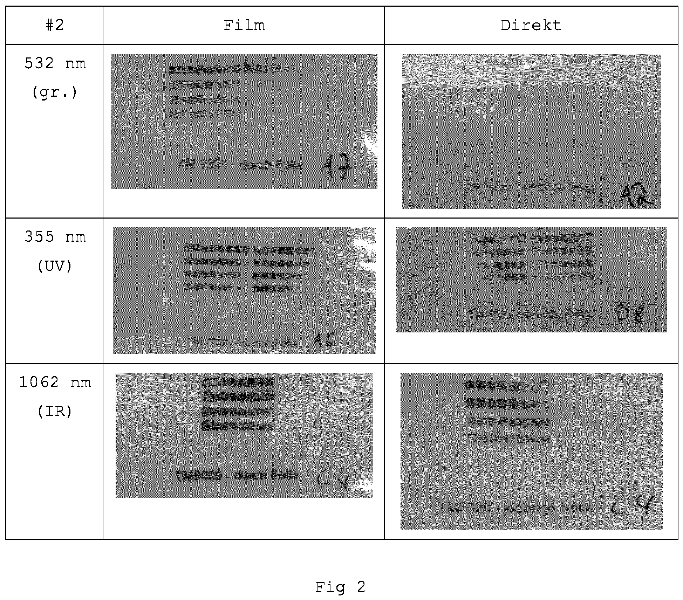

Es zeigt Fig 2 die Versuchsanordnung auf der ablösbaren Klebstoffformulierung #2, linkerhand durch die PET-Folie hindurch, rechterhand im Direktauftrag. An jedem Laser wurde eine f = 160mm Optik verwendet. Es ist ersichtlich, dass der UV- und der IR-Laser bisweilen mit zu hoher Energie betrieben wurden, sodass Löcher in den Klebstoff eingebrannt wurden.

Abschliessend wurde mit einem geeigneten Parameterset ein Schriftzug ("TMxxx0 - durch Folie" oder "TMxxx0 - klebrige Seite) auf den Klebstoff markiert.

Beide Klebstoffe verhalten sich ähnlich. Als besonders geeignet hat sich eine Pulsfrequenz von 16 kHz, eine Leistung von 4 Watt und eine Markiergeschwindigkeit von 500 mm/s mit einem IR-Laser der Wellenlänge 1062nm erwiesen.

## Patentansprüche

1. Schmelzklebstoffzusammensetzung, welche wenigstens eine Verbindung aufweist, die unter Einfluss von Laserlicht ihre Farbe ändert oder zu einer Farbänderung in der Schmelzklebstoffzusammensetzung führt.

2. Zusammensetzung nach Anspruch 1, welche bei bestimmungsgemässem Gebrauch eine 180° Schälfestigkeit auf Stahl von mehr als 5 N/25mm aufweist, vorzugsweise von mehr als 6.5 N/25mm, besonders bevorzugt von mehr als 8 N/25mm, jeweils gemessen gemäss Messmethode 101 der PSTC *"Test Methods for Pressure Sensitive Adhesive Tapes",* 16^{th} Ed. (2014) .

3. Zusammensetzung nach Anspruch 1, welche bei bestimmungsgemässem Gebrauch eine 180° Schälfestigkeit auf Stahl von 1 bis 8 N/25mm aufweist, vorzugsweise von 2 bis 6.5 N/25mm, besonders bevorzugt von 3 bis 5 N/25mm, jeweils gemessen gemäss Messmethode PSTC-101 der *"Test Methods for Pressure Sensitive Adhesive Tapes",* 16^{th} Ed. (2014).

4. Zusammensetzung gemäss einem der vorhergehenden Ansprüche, basierend auf elastomerem Synthesekautschuk, insbesondere
▪ gesättigten thermoplastischen Polystyrolelastomeren, kurz TPS-Elastomeren, vorzugsweise:
Styrol-Ethylen-Butylen-Copolymeren, kurz SEB; Styrol-Ethylen-Propylen-Copolymeren, kurz SEP; Styrol-Ethylen-Ethylen-Propylen-Copolymeren, kurz SEEP; Styrol-Ethylen-Butylen-Styrol-Copolymeren, kurz SEBS;
Styrol-Ethylen-Propylen-Styrol-Copolymeren, kurz SEPS;
Styrol-Ethylen-Ethylen-Propylen-Styrol-Copolymeren, kurz SEEPS;
sowie Kombinationen hiervon; und/oder
▪ ungesättigten thermoplastischen TPS-Elastomeren, vorzugsweise:
Styrol-Butadien-Blockcopolymeren, kurz SB;
Styrol-Isopren-Blockcopolymeren, kurz SI;
Styrol-Butadien-Butylen-Blockcopolymeren, kurz SBB;
Styrol-Butadien-Isopren-Blockcopolymeren, kurz SBI;
Styrol-Butadien-Styrol-Blockcopolymeren, kurz SBS;
Styrol-Butadien-Butylen-Styrol-Blockcopolymeren, kurz SBBS;
Styrol-Isopren-Styrol-Blockcopolymeren, kurz SIS;
Styrol-Butadien-Isopren-Styrol-Blockcopolymeren, kurz SBIS;
sowie Kombinationen hiervon
▪ Polyolefinen, insbesondere Polyethylen, Polypropylen, Polyolefin-Copolymeren und/oder amorphen Poly-Alpha-Olefinen (APAO),
▪ Ethylvinylacetat (EVA) und Copolymeren davon (EVAC).

5. Zusammensetzung nach einem der vorhergehenden Ansprüche, aufweisend Bestandteile, die ausgewählt sind, alleine oder in Kombination, aus der Gruppe bestehend aus
- Klebe-Harzen, insbesondere: Aliphatische, cycloaliphatische und aromatische Kohlenwasserstoff-basierte Harze; Kolophoniumharz(-ester); Terpen-basierte Harze (auch phenolisch); Tall-Öl; inbesondere hydrierte Pentaerythrolharze; insbesondere hydrierte Glyzerinharze; Hydroabietylharze; Olefinharze; Pinenharze; α-Methylstyrolhzarze; Styrolharze; Cumaren-Indenharze; Melaminharze; Polyethyleniminharze; Cumaronharze; sowie Kombinationen hiervon;
- Weichmachern, insbesondere: Phthalate; Adipate; Citrate; Phosphate; Trimellitsäure; Sulfonsäure; raffinierte NapthBalinöle; Weiss-Öle, Mineralöle, Polybuten, Polybutylen-Polyisobutylen Copolymere; Paraffinöle, Polyalpha-Olefine; Alkylester von Cyclohexandicarbonsäure und Adipinsäure; Acrylatweichharze, insbesondere Poly-n-Butylacrylat; Polyvinylmethylether; und Mischungen davon;
- Stabilisatoren, insbesondere: Sterisch gehinderte Phenole, insbesondere als Rest an Phosphiten; sterisch gehinderte Lactone; sterisch gehinderte Amine; sowie Kombinationen hiervon.

6. Zusammensetzung nach einem der vorhergehenden Ansprüche, wobei diese einen Farbumschlag durchläuft, wenn sie Laserlicht einer der folgenden Wellenlängenbereiche ausgesetzt wird:
- Wellenlängenbereich von 300 bis 400 nm, bevorzugt 330 bis 380 nm (UV-Laser);
- Wellenlängenbereich von 500 bis 570 nm, bevorzugt 510 bis 560 nm (grüner Laser); und/oder
- Wellenlängenbereich von 1000 bis 1200 nm, bevorzugt 1030 bis 1100 nm (IR-Laser).

7. Zusammensetzung gemäss einem der vorhergehenden Ansprüche, wobei die Zusammensetzung zusätzlich umfasst ein Farbumschlagsystem, durch welches:
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist.

8. Verfahren zum Markieren einer Schmelzklebstoffzusammensetzung, insbesondere einer Schmelzklebstoffzusammensetzung nach einem der Ansprüche 1 bis 7, aufweisend die Schritte:
a. Bereitstellen einer Schmelzklebstoffzusammensetzung nach einem der Ansprüche 1 bis 7;
b. Erhitzen der Schmelzklebstoffzusammensetzung;
c. Auftragen der Schmelzklebstoffzusammensetzung auf wenigstens ein Substrat;
d. Abbindenlassen der Schmelzklebstoffzusammensetzung;
e. Aufbringen einer Markierung in/auf der Schmelzklebstoffzusammensetzung mittels Laserlicht.

9. Verfahren nach Anspruch 8, wobei Schritt c ein Auftragen der Schmelzklebstoffzusammensetzung zwischen einem ersten und einem zweiten Substrat ist, um das erste und das zweite Substrat zu verkleben.

10. Verfahren nach einem der Ansprüche 8 oder 9, wobei die Markierung mit einem Laser des folgenden Wellenlängenbereichs aufgebracht wird:
- Wellenlängenbereich von 300 bis 400 nm, bevorzugt 330 bis 380 nm (UV-Laser);
- Wellenlängenbereich von 500 bis 570 nm, bevorzugt 510 bis 560 nm (grüner Laser);
- Wellenlängenbereich von 1000 bis 1200 nm, bevorzugt 1030 bis 1100 nm (IR-Laser);
oder einer Kombination davon.

11. Verfahren nach Anspruch 10, wobei die Markierung mit einer Pulsfrequenz von 14 bis 18 kHz und/oder einer Leistung von 3 bis 6 Watt aufgebracht wird.

12. Verfahren zum Applizieren eines Klebstoffsystems auf ein Substrat, umfassend die Schritte gemäss einem der Ansprüche 8 bis 11, und zusätzlich umfassend den Schritt:
a. Auftragen einer Schicht einer von der Schmelzklebstoffzusammensetzung verschiedenen, zweiten Klebstoffzusammensetzung in räumlicher Nähe der Schmelzklebstoffzusammensetzung, bevorzugt unmittelbar angrenzend an die Schmelzklebstoffzusammensetzung,
wobei durch die zweite Klebstoffzusammensetzung
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist;
und wobei besonders bevorzugt die Schmelzklebstoffzusammensetzung und die zweite Klebstoffzusammensetzung einander ganz oder teilweise überlappen.

13. Verwendung einer Zusammensetzung nach einem der Ansprüche 1 bis 7 als Kunststofffolie; Klebefilm; als Beschichtungsmittel; als Ein-Komponenten-Klebstoff; als Zwei-Komponenten-Klebstoff; als Etikette, insbesondere transparente Etikette.

14. Verwendung nach Anspruch 13, wobei die Kunststofffolie; der Klebefilm; das Beschichtungsmittel; der Ein-Komponenten-Klebstoff; der Zwei-Komponenten-Klebstoff; die Etikette, insbesondere transparente Etikette, als Sicherheitsklebstoff zur irreversiblen Visualisierung einer nachfolgenden Trennung von Substrat und Klebstoff verwendet wird.

15. Kit umfassend eine Schmelzklebstoffzusammensetzung nach einem der Ansprüche 1 bis 6 und zusätzlich umfassend eine zweite, von der Schmelzklebstoffzusammensetzung verschiedene Klebstoffzusammensetzung, wobei durch die zweite Klebstoffzusammensetzung
- ein erster Farbumschlag bei einer Erhöhung der Umgebungstemperatur auf eine Temperatur ≥ T1 anzeigbar ist;
- ein zweiter Farbumschlag bei einer Erniedrigung der Umgebungstemperatur auf eine Temperatur ≤ T2 anzeigbar ist;
wobei T1 > T2 ist;
und optional umfassend einen Informationsträger mit Instruktionen zum Ausführen eines Verfahrens nach Anspruch 12.
